# EUROPEAN PATENT APPLICATION

(11) **EP 1 347 202 A2**
(43) Date of publication of application: **24.09.2003**
(21) Application number: 03005918.2
(22) Date of filing: 17.03.2003
(51) Int. Cl.: F16H 1/28

(54) **Epicycloidal gearing and graphic method for the calculation of centers of rotation of the planetary gears of said epicycloidal gearing**

(30) Priority: 18.03.2002 IT VI20020046
(71) Applicant: FITEM SRL, 30030 Maerne (VE) (IT)
(72) Inventor: Berengo, Giorgia, 30174 Mestre (VE) (IT)
(74) Representative: Bonini, Ercole

(57) **Abstract**

An epicycloidal gearing (1; 20) particularly fit to be employed in rolling up devices (A) for curtains, shutters and alike comprising: a crown wheel (2; 2') with inner toothing; a pinion gear (3; 3') placed coaxial inside of said crown wheel (2; 2') and three planetary gears (4, 5, 6; 4', 5', 6') simultaneously meshed with said crown (2; 2') and with said pinion (3, 3'). Each of said planetary gear defines a respective radial direction (X, Y, Z) of alignment of its own center of rotation (4b, 5b, 6b) with the center of rotation (7) of said pinion (3, 3') and of said crown (2; 2'), characterized in that said pinion (3, 3'), said crown (2; 2') and said planetary gears (4, 5, 6; 4', 5', 6') are equipped with corrected contour teeth (3a, 2a, 4a, 5a, 6a), whose sum is a number not divisible by three.

## Description

The invention is about an epicycloidal gearing particularly fit to be used in rolling up devices for curtains, shutters or similar, and a graphic method for the calculation of centers of rotation of the planetary gears of said epicycloidal gearing.

It is well known that the epicycloidal gearings are particular kinematic devices which basically consist of a crown wheel with internal toothing, among which three gear wheels named planetary gears mesh.

The previously described state of the art epicycloidal gearings are used, for example, for the transmission of motion inside devices for rolling up and unrolling curtains or shutters, where they also make the reduction of the number of revolutions of a driving motor.

In such embodiments the epicycloidal gearing is placed inside of a tubular container where the crown wheel is fixed to the inner wall of the tubular container, while the axis of the pinion gear is coupled to the electrical motor.

Usually in order to make the desired output gear ratio from the rolling up devices several epicycloidal gearings serially connected are used, wherein the pinion gear of the first epicycloidal gearing is made to rotate by the motor while the planetary gears of the last epicycloidal gearing make a frame rotate from which the output shaft protrudes.

One of the problems which the previously described state of the art epicycloidal gearings have, consists by the fact that they should have the least possible dimensions, compatible with the gear ratio to be made and, with the same torque to transmit.

According to the state of the art, the number of teeth of the crown wheel, of the pinion gear and of the planetary gears, they are determined according to the desired gear ratio, by complying with the condition that the sum of the number of teeth were a multiple of three.

In such manner each of the planetary gears are arranged with the center of rotation aligned according to a radial direction which passes through the center of the pinion gear and of the crown wheel, and the radial directions of the three planetary gears reciprocally form three angles each having a 120° width.

In other words, the radial directions of alignment of the center of rotation of each planetary gear with the center of the pinion gear, reciprocally form obtuse angles each having a 120° width.

It is known in the state of the art literature the possibility of correcting the toothings by modifying their contour, for example by varying the distance between the centers of the mutually meshing wheels. Therefore it is possible to reduce the number of teeth of the mutually meshing wheels, with the advantage of obtaining bigger size teeth, fit to transmit greater torques and to reduce the dimensions.

It is obvious that by adopting the abovementioned corrections, the total number of teeth of the wheels, of the crown and the pinion, is no longer a multiple of three and consequently it is impossible to place the planetary gears with the centers of rotation aligned according to radial directions and concentrical to the center of rotation of the pinion and of the crown which reciprocally form 120° angles.

It is thus understood that by getting over the habit of planning the epicycloidal gearings having the planetary gears, the pinion and the crown with the total number of teeth divisible by three and the planetary gears reciprocally arranged at 120°, epicycloidal gearings could be made having better mechanical and operational features.

The object of the present invention is that of making an epicycloidal gearing which compared to the corresponding state of the art epicycloidal gearings would have smaller dimensions.

It is another object that of making an epicycloidal gearing which compared to matching epicycloidal gearings would allow the transmission of greater torques.

Yet another object of the invention is that of making a graphic method that would allow determining the position of the center of rotation of each planetary gear of the epicycloidal gearing.

The abovementioned objects are accomplished by making an epicycloidal gearing particularly fit to be employed in rolling up devices for curtains, shutters and alike that in line with the main claim, it comprises:
- a crown wheel with inner toothing;
- a pinion gear placed coaxial inside of said crown wheel;
- three planetary gears simultaneously meshed with said crown and with said pinion, each of said planetary gear by defining a respective radial direction of alignment of its own center of rotation with the center of rotation of said pinion and of said crown, and characterized in that said pinion, said crown and said planetary gears are equipped with corrected contour teeth, whose sum is a number not divisible by three.

According to a preferred embodiment the correction of the teeth's contour is achieved by modifying the distance between the centers among the mutually meshing elements.

In the epicycloidal gearing of the invention, the center of rotation of each of the planetary gears is aligned with the center of rotation of the pinion and of the crown according to a radial direction and such radial directions reciprocally form three obtuse angles, at least two of which having a width different from an angle of 120°.

The invention also comprises a graphic method that through rotatory translations of the planetary gears, allows to determine the position of each of their axis of rotation in order to carry out the meshing with the pinion gear.

Advantageously, according to the principles of the present invention, an epicycloidal gearing smaller than the equivalent state of the art gearings is achieved.

Yet advantageously, an epicycloidal gearing fit to transmit a torque greater than that of the equivalent state of the art gearings is accomplished.

Said objects and advantages will be better highlighted in an explanatory but not limiting way in the description of some preferred embodiments with reference to the annexed drawings, wherein:
- Figure 1 shows an embodiment of the epicycloidal gearing of the invention;
- Figure 2 is an enlarged detail of figure 1;
- Figure 3 is an enlarged front view of the epicycloidal gearing of the invention of figures 1 and 2;
- Figures 4 to 6 show the graphic method for determining the center of rotation of each planetary gear;
- Figures 7 and 8 show two different embodiments of the epicycloidal gearing of the invention.

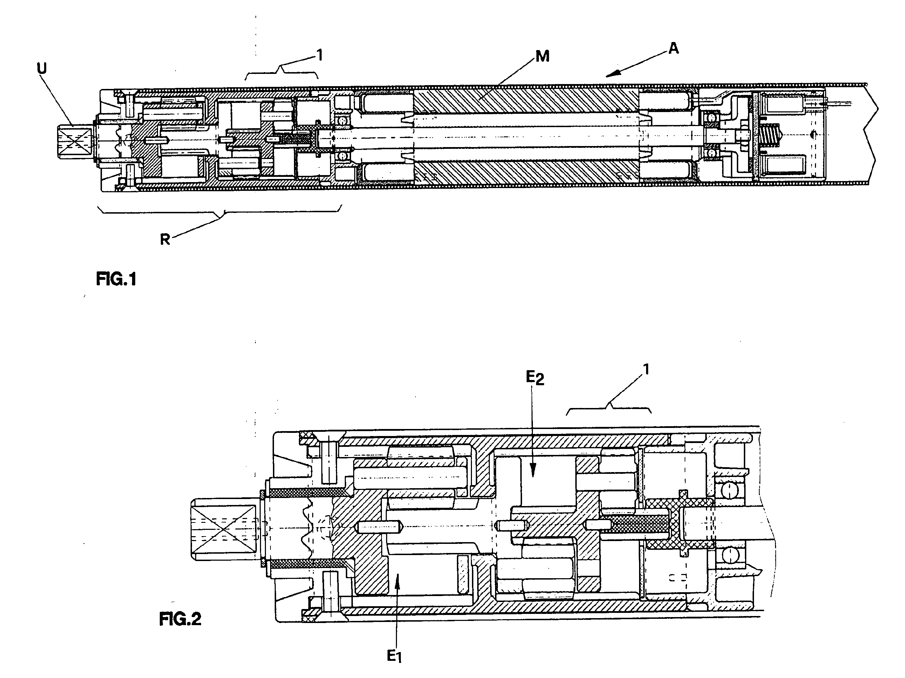

The epicycloidal gearing of the invention is generally indicated with the number 1 in figure 1 wherein it is illustrated in one of its specific embodiments where it is used as a rolling up device for curtains, shutters or alike, generally indicated with A.

In figure 2 it is described that in the rolling up device A, the epicycloidal kinematic device 1 of the invention is part of a reduction unit, generally indicated with R, which consists of two further epicycloidal gearings E1, E2, similar to the epicycloidal gearing 1, to which they are kinematically connected in order to transmit the motion from the motor M to the output shaft U.

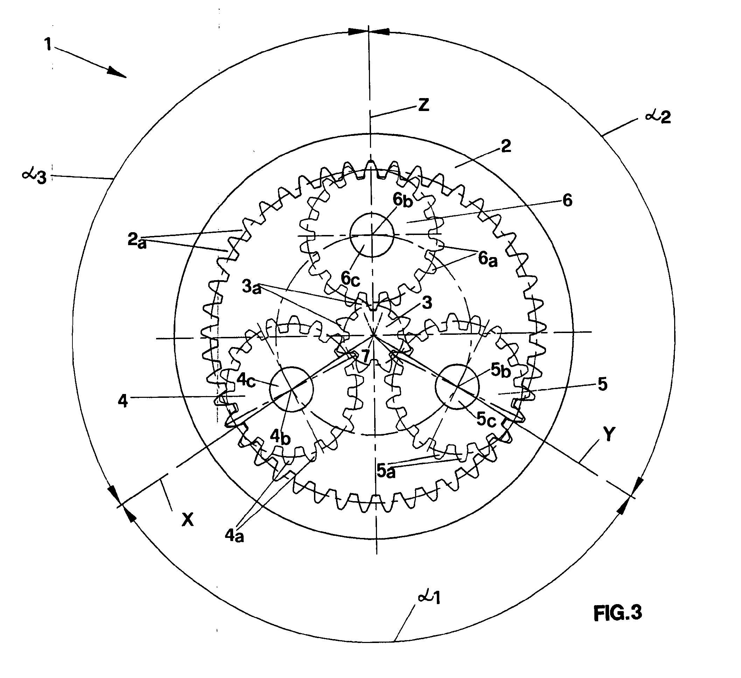

The epicycloidal gearing of the device 1, is illustrated in greater details in figure 3 where it is shown in a front and enlarged view and wherein the following is comprised:
- a crown wheel 2 equipped with the inner peripheral teeth 2a;
- a pinion gear 3 equipped with outer peripheral teeth 3a and coaxial internally to the crown wheel 2;
- three planetary gears equipped with outer peripheral teeth 4a, 5a, 6a respectively which simultaneously mesh with the teeth 2a of the crown wheel 2 and with the teeth 3a of the pinion gear 3.

It is to be noted that each planetary gear 4, 5, 6 determines a radial direction X, Y, Z respectively of alignment of their centers of rotation 4b, 5b, 6b with the center of rotation 7 of the pinion 3 and of the crown 2 which reciprocally coincide.

Said radial directions X, Y, Z reciprocally define their respective inclination angles and more precisely:
- a first angle α₁ comprised between a first radial direction X and a second radial direction Y;
- a second angle α₂ comprised between the second radial direction Y and a third radial direction Z;
- a third angle α₃ comprised between the first radial direction X and the third radial direction Z.

According to the invention the pinion 3, the crown 2 and the planetary gears 4, 5, 6 are equipped with corrected contour teeth 3a, 2a, 4a, 5a and 6a, whose sum is a number not divisible by three.

In order to determine the number of teeth of the elements which make up the epicycloidal gearing, the known kinematic relations found in the specific technical literature are used based on the desired gear ratio.

In a similar manner, the correction of the teeth's contour is achieved based on the known relations by applying the coefficients of correction of values that are at the designer's discretion as a function of the operational needs.

In the specific case here described, the correction of the teeth's contour is accomplished through the displacement of the distance between the centers, it too being a known correction technique.

The radial directions X, Y, Z of alignment of the their centers of rotation 4b, 5b, 6b of each of the planetary gears 4, 5, 6 with the center of rotation 7 of the pinion and of the crown, do not reciprocally form three angles of 120° because the sum of the teeth of the gearing is not a number divisible by three.

The invention thus also provides a graphic method for determining the position of the centers of rotation 4b, 5b, 6b of each of the planetary gears 4, 5, 6 respectively which allows the meshing of the planetary gears with the pinion 3 and the crown 2 that make up the gearing 1.

It must be noticed that the exact determination of the position of such centers, is useful in the factory operative phase in order to determine the position wherein, inside the frame which supports the planetary gears, the holes which house the shafts 4c, 5c, 6c respectively of each planetary gear must be made.

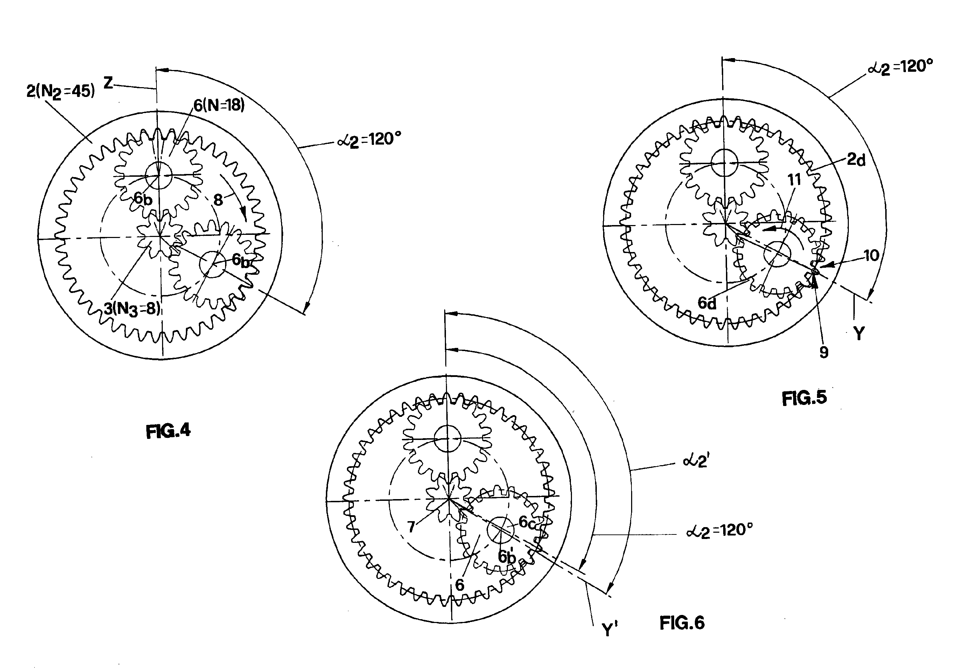

Said graphic method is described with reference to figures 4 to 6 where the epicycloidal gearing of the invention comprises:
- a crown 2 having a number of teeth N₂ = 45;
- a pinion 3 having a number of teeth N₃ = 8;
- three planetary gears 4, 5, 6 all having the same number of teeth N = 18.

The method provides for the initial positioning of a planetary gear, for example the gear 6 of figure 4, with their center of rotation 6b aligned along the third radial direction Z placed in a vertical position.

Starting from such configuration, the planetary gear 6 is made to roll according to the direction marked by the arrow 8 until it is placed into the configuration shown again in figure 4 with the center of rotation 6b aligned along the second radial direction Y which forms a second 120° width angle α₂ with the third radial direction Z.

It is obvious that after such rolling, in the final position reached by the planetary gear 6, there can not be any meshing with the pinion 3 because the sum of the number of teeth of the crown 2, of the pinion 3 and of the planetary gears 4, 5 and 6, does not give as a result a number divisible by three.

Referring to the configuration shown in figure 4 and also in figure 5, the point 9 which is determined by the intersection of the second radial direction Y with the mutually tangent points between the pitch lines 2d and 6d respectively of the crown wheel 2 and of the planetary gear 6.

Therefore the point 9 is taken as the center in order to carry out a new rotation of the planetary gear 6 according to the counterclockwise direction marked by the arrow 11, until the gear 6 is meshed with the pinion 3 as well.

After such rotation, the center of rotation 6a of the planetary gear 6, is placed in a new position 6a' and according to a new second radial direction Y' shown in figure 6 which connects the new position 6a' of the center of rotation 7 of the pinion 3 and of the crown 2.

The new second radial direction Y' and the third radial direction Z reciprocally form a new second angle α'₂ which, in this case, has a greater width than the second angle α₂ previously defined between the second radial direction Y and the third radial direction Z.

At the new reached position 6a' of the center of rotation 6a of the planetary gear 6 shown in figure 6, the frame (not shown in the figure) can be drilled in order to insert the shaft 6c which supports the planetary gear 6.

Clearly the graphic construction needs to be made also for the other planetary gear, thus determining for it as well the new radial direction and the subsequent angle which allow the meshing of the planetary gear with the pinion and the crown.

It is obvious that the values of the inclination angles between the radial directions of alignment of the centers of each planetary gear with the center of the pinion and of the crown, will vary according to the teeth's contour and to their number.

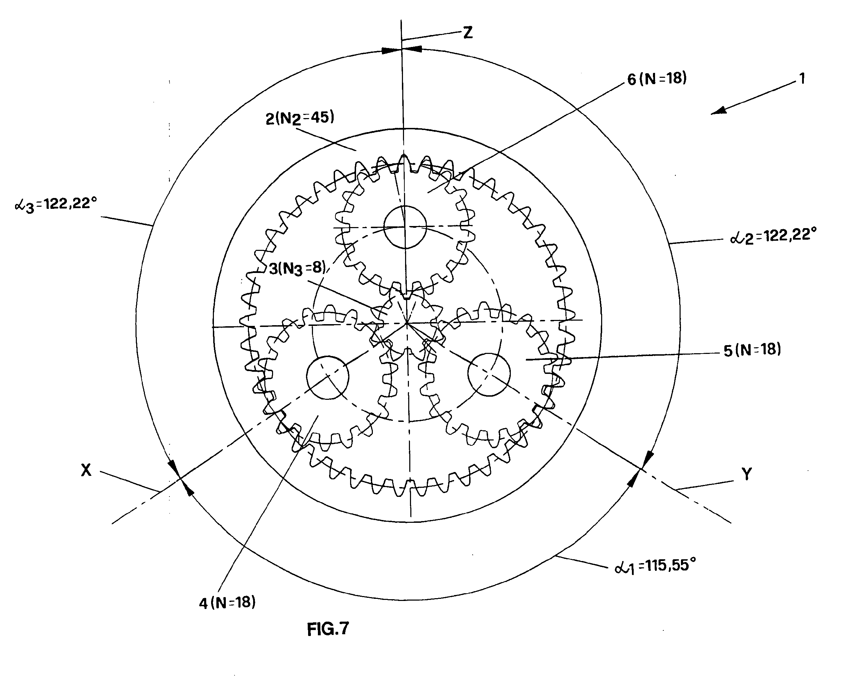

By applying the method of the previously described graphic construction, the epicycloidal gearing shown in figures 4 to 6 takes up the final configuration shown in figure 7 where it is illustrated that the radial directions of alignment of the centers of rotation 4b, 5b, 6b of each of the planetary gears 4, 5, 6 reciprocally form the angles which are listed hereafter with their respective widths:
- a first 115.55° width angle α₁, comprised between the first radial direction X and the second radial direction Y;
- a second 122.22° width angle α₂, comprised between the second radial direction Y and the third radial direction Z;
- a third 122.22° width angle α₃, comprised between the first radial direction X and the third radial direction Z.

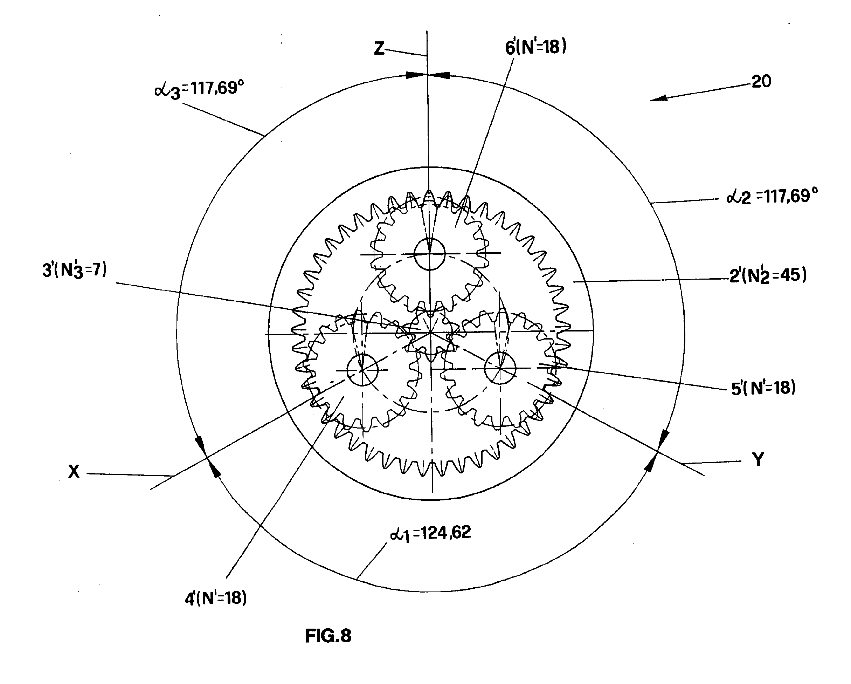

Figure 8 shows an operative embodiment of the epicycloidal gearing of the invention, generally indicated with 20, wherein their constitutive elements have the following features:
- a crown 2' having a number of teeth N'₂ = 45;
- a pinion 3' having a number of teeth N'₃ = 7;
- three planetary gears 4', 5', 6' all having the same number of teeth N' = 18;
- a first 124.62° width angle α₁, comprised between the first radial direction X and the second radial direction Y;
- a second 117.69° width angle α₂, comprised between the second radial direction Y and the third radial direction Z;
- a third 117.69° width angle α₃, comprised between the first radial direction X and the third radial direction Z.

It is understood based on what has been previously said that the epicycloidal gearing of the invention achieves all the preset objects.

More specifically, further kinematic configurations different from those illustrated and described as a function of the desired operative needs can be applied to the epicycloidal gearing of the invention.

It is obvious that such possible variations because they fall within the scope of protection of the following claims, must be all considered protected by the present patent.

## Claims

1. An epicycloidal gearing (1; 20) particularly fit to be employed in rolling up devices (A) for curtains, shutters and alike comprising:
- a crown wheel (2; 2') with inner toothing;
- a pinion gear (3; 3') placed coaxial inside of said crown wheel (2; 2');
- three planetary gears (4, 5, 6; 4', 5', 6') simultaneously meshed with said crown (2; 2') and with said pinion (3, 3'), each of said planetary gear by defining a respective radial direction (X, Y, Z) of alignment of its own center of rotation (4b, 5b, 6b) with the center of rotation (7) of said pinion (3, 3') and of said crown (2; 2'), **characterized in that** said pinion (3, 3'), said crown (2; 2') and said planetary gears (4, 5, 6; 4', 5', 6') are equipped with corrected contour teeth (3a, 2a, 4a, 5a, 6a), whose sum is a number not divisible by three.

2. The epicycloidal gearing (1; 20) according to claim 1), **characterized in that** said radial directions (X, Y, Z) of alignment of the center of rotation (4b, 5b, 6b) of each of said planetary gears (4, 5, 6; 4', 5', 6') with the center of rotation 7 of said pinion (3, 3') and of said crown (2; 2'), reciprocally form three obtuse angles (α₁, α₂, α₃), at least two of said angles having a width different from 120°.

3. The epicycloidal gearing (1; 20) according to claim 1), **characterized in that** said corrected contour of said teeth (2a, 3a, 4a, 5a, 6a) is achieved by modifying the distance between the centers among the mutually meshing toothed elements (2, 3, 4, 5, 6) to which they belong.

4. The epicycloidal gearing (1) according to claim 2), **characterized by** comprising:
- a crown wheel (2) having a number of teeth N₂ = 45;
- a pinion gear (3) having a number of teeth N₃ = 8;
- three planetary gears (4, 5, 6) all having the same number of teeth N = 18 in said epicycloidal gearing (1), said radial directions (X, Y, Z) being fit to define:
- a first 115.55° width angle α_{1,} comprised between the first radial direction (X) and the second radial direction (Y);
- a second 122.22° width angle α₂, comprised between the second radial direction (Y) and the third radial direction (Z);
- a third 122.22° width angle α₃, comprised between the first radial direction (X) and the third radial direction (Z).

5. The epicycloidal gearing (20) according to claim 2), **characterized by** comprising:
- a crown wheel (2') having a number of teeth N'₂ = 45;
- a pinion gear (3') having a number of teeth N'₃ = 7;
- three planetary gears (4', 5', 6') all having the same number of teeth N' = 18;
in said epicycloidal gearing (20), said radial directions (X, Y, Z) being fit to define:
- a first 124.62° width angle α₁, comprised between the first radial direction (X) and the second radial direction (Y);
- a second 117.69° width angle α₂, comprised between the second radial direction (Y) and the third radial direction (Z);
- a third 117.69° width angle α₃, comprised between the first radial direction (X) and the third radial direction (Z).

6. A graphic method for determining the center of rotation (4b, 5b, 6b) of each of said planetary gears (4, 5, 6; 4', 5', 6') belonging to the epicycloidal gearing (1, 20) according to claim 1), **characterized by** comprising the following operations:
- placing any of the planetary gears (6, 6') with their center of rotation (6a) aligned according to said center of rotation (7) of said pinion (3, 3') and of said crown (2, 2') such to define a third radial direction (Z);
- making said planetary gears (6, 6') roll on said crown wheel (2, 2') until defining a second radial direction (Y) of alignment with said crown (2, 2') which form an angle (α₂) with said first radial direction (Z);
- defining the point of intersection (9) of said second radial direction (Y) with the pitch lines (6d) of said planetary gear (6; 6') and the pitch lines (2d) of said crown wheel (2, 2');
- rotating said planetary gear (6; 6') around said point of intersection (9) until defining the meshing of said planetary gear (6; 6') with said pinion (3, 3');
- determining the new position (6b') wherein said center of rotation (6b) of said planetary gear (6; 6') is located;
- connecting said center of rotation (7) of said pinion (3, 3') and of said crown (2, 2') with said new position (6'b) of said center of rotation (6b) of said planetary gear (6; 6') in order to define a further second radial direction (Y') which forms a second angle (α'₂) different from 120° with said third radial direction (Z).
